# EUROPEAN PATENT APPLICATION

(11) **EP 2 495 548 A1**
(43) Date of publication of application: **05.09.2012**
(21) Application number: 12157634.2
(22) Date of filing: 01.03.2012
(51) Int. Cl.: G01N 21/64

(54) **Method of absolute dating of bone finds**

(30) Priority: 01.03.2011 IT RM20110096
(71) Applicant: UNIVERSITA' DEGLI STUDI "G. D'ANNUNZIO", I-66100 Chieti (IT)
(72) Inventor: Capasso, Luigi, 66100 Chieti (IT); D'anastasio, Ruggero, 66100 Chieti (IT)
(74) Representative: Santi, Filippo

(57) **Abstract**

The present invention concerns a method of absolute dating of bone finds by measuring the intensity of the emitted autofluorescence, in particular through the use of a confocal microscope, said method preferably comprising the following steps:
- preparing analysis samples starting from plugs of not decalcified human osseus tissue, by realising thin sections, the size of which is tens or hundreds of µm;
- dehydrating the analysis samples;
- arranging the analysis samples on microscope slides, reference samples being arranged on the same slides, said reference samples being made of fluorescence emitting particles having known intensity;
- laser irradiating the analysis samples;
- measuring and comparing the intensity of the emitted autofluorescence from both the analysis samples and the reference samples.

## Description

The present invention concerns a method of absolute dating of bone finds.

More in particular the invention concerns a method of absolute dating of bone finds based on the intensity of the fluorescence emitted by the bone observed with a confocal microscope with laser generator.

As it is well known, dating of bone finds, particularly the human ones, is a fundamental step of anthropological investigations, in both archaeological and forensic ambit. At present, dating of bone finds is realised applying two kinds of investigations: methods of relative dating and methods of absolute dating.

According to the methods of relative dating it is calculated the age of bone finds on the base of the stratigraphic level of discovery and and their special rekation with other fossils or remains, defined as "guide fossils" or "guide remains". They provide for information relating to the greater or smaller antichity of a finding with respect to another.

The methods of absolute dating, on the contrary, allow to determine the absolute age of the oganic remains in a direct way.

Two kinds of methods of absolute dating exist. Radiometric methods of absolute dating are based on the phenomenon of radioactive isotopes decay of some elements present in nature, which turn in different isotopes of the same element or of other elements with a well known decay rate, and expressed for example as "half-life", and anyway according to a well known "decay curve". Amongst the isotopes which can be used are comprised carbon-14 (half life of 5.730 years), thorium-230 (half life of 75200 years), uranium-234 (half life of 250000 years) and potassium-40 (half life of 1.300.000.000 years). Other methods of absolute dating of radiometric kind are: "thermoluminescence" and the "electron spin resonance", based on the determination of the energy or, directly, of the number of electrons released by the crystal structures of biological remains irradiated with radioactive elements.

A non radiometric technique of absolute dating is the so-called "racemization" of amino acids: it is based on the transformation with time of these molecole from the levorotatory form, present in living tissue, to the dextrorotatory form, starting from the moment of death of the body.

It has recently been demonstrated that the ancient human bone is provided with its own fluorescence (autofluorescence or primary fluorescence), likely due to the persistence of organic residues (and in particular to the collagen fibres), as well as to phenomena of diagenesis, i.e. of chemical and structural transformation of the mineral matrix of the tissue.

More in particular (Capasso L., D'Anastasio R., Michetti E. "The use of confocal microscope in the study of ancient bones" (Anthropologie, XXXIX/2-3: 181-186, 2011)), it has bee shown that this optical property of the ancient bone allows to observe histological preparations with fluorescence microscopes, capable of providing images and histological reconstructions, not otherwise obtainable by classical method.

The authors of this prior art document states that possible future developments of such a discovery can be known only after a necessary going deeper with the research.

Previously (Prentice A.I.D. "Autofluorescence of bone tissue" (J Clin Pathol, 20: 717-719, 1967)), the correlation between the intensity of fluorescence of different istological structures of the bone and biologica age of the subject to which the bone belongs was described qualitatively. Always according to this prior art document, a study was conducted on samples of fresh bone taken during post mortem examinations, but the study of the phenomenon of autofluorescence of ancient human bone from archaeological contexts was never addressed, i.e. it was not proposed nor hypothesized any relationship between the intensity of the autofluorescence of the ancient human bone and the dating of the find, nor it is shown a procedure for measuring the intensity of fluorescence.

In this context it is included the solution according to the present Invention, which aims to provide a new method of absolute dating of bone finds, which is proposed as an alternative particularly good, simple to execute and economically advantageous.

These and other results are obtained according to the present invention by proposing a new method of absolute dating of human and/or animal bone finds from archaeological excavations, paleontological and criminal investigations, based on the intensity of the fluorescence emitted by the bone observed with a confocal microscope with laser generator.

According to the proposers of the present invention, the autofluorescence of the bone allows to use the confocal microscope as a further investigation instrument in the field of anthropology.

During the last years, the confocal microscope has been used to study the histological structure of the one because, unlike other microscopes, it allows laser scanning the histological sample and three-dimensional reconstruction of the major tissue structures.

In the light of the above, the proposers of the present invention carried out an in-depth investigation of bone material from various archaeological sites from different ages and recent burial contexts, showing that a correlation exists between the intensity of the fluorescence and dating of finds (calculated for comparative purposes also by means of the classical anthropological and archaeological dating techniques).

More in particular, the proposers of the present invention managed to show a statistical correlation between the intensity of the fluorescence emitted by the ancient bone and the dating of the find and, still more in particular, that the intensity of the fluorescence increases gradually passing from the more old samples to those more recent in time.

An aim of the present invention is therefore that of proposing a method of absolute dating of bone finds that allows to overcome the limits of the solutions according to the prior art and to achieve the previously said technical results.

A further aim of the invention is that said method can be carried out with substantially low costs, as far as both the costs for buying the necessary instruments and the costs for performing the different analysis is concerned.

Not last purpose of the invention is that of proposing a method of absolute dating of bone finds that is substantially simple, safe and reliable.

It is therefore a specific object of the present invention a method of absolute dating of bone finds by measuring the intensity of the emitted autofluorescence, performed with a confocal microscope.

In particular, according to the invention, said method of absolute dating of bone finds comprises the following steps:
- preparing analysis samples starting from plugs of not decalcified human osseus tissue, by realising thin sections, the size of which is tens or hundreds µm;
- dehydrating the analysis samples;
- arranging the analysis samples on microscope slides, reference sample being arranged on the same slides, made of fluorescence emitting particles having known intensity;
- laser irradiating the analysis samples;
- measuring and comparing the intensity of the emitted autofluorescence from both the analysis samples and the reference samples.

Preferably, according to the invention, said step of preparing analysis samples by realising thin sections provides for realising sections having a thickness comprised between 100 and 200 µm.

Moreover, always according to the invention, said step of dehydrating comprises a series of consecutive washes using alcohol with growing strength and terpenes, alcohol strength varying preferably from 70° to 100° and said terpenes comprising limonene.

Then, always according to the present invention, said step of laser irradiating the analysis samples is performed by using the excitation line at 488nm (AOTF: 15%) of an argon laser source (15mW), whereas said step of measuring the intensity of the sample emitted autofluorescence is performed by using a HTF 488/543nm filter as the first dichroic, a NTF 545nm filter as the second dichroic and at last filtering with BP 505-530nm before the PMT acquisition.

It is evident the effectiveness of the method of absolute dating of bone finds according to the present invention, which allows to establish a inversely propotional relation between intensity of the fluorescence and dating of the bone find. The intensity of the fluorescence gradually decreases with time. Obtained data, reported in the following examples, allow to affirm that it is therefore possible to date bone finds quantifying the emission of fluorescence by means of the confocal microscope.

The present invention will be described in the following, for illustrative, non limitative purposes, according to preferred embodiments, with reference in particular to some illustrative examples and to the figures of the enclosed drawing, wherein:
- figure 1a mostra una riproduzione fotografica di un osseous sample suddiviso in campi according to the present invention,
- figure 1b shows a diagram of the varying of the absolute frequency of each sample as a function of the intensity of the signal,
- figure 2 shows a diagram of the varying of the absolute frequency of each sample as a function of the intensity of the signal of the sample coming from Comino,
- figure 3 shows a diagram of the varying of the absolute frequency of each sample as a function of the intensity of the signal of the sample coming from Opi,
- figure 4 shows a diagram of the varying of the absolute frequency of each sample as a function of the intensity of the signal of the sample coming from Ercolano,
- figure 5 shows a diagram of the varying of the absolute frequency of each sample as a function of the intensity of the signal of the sample coming from Monte d'Argento,
- figure 6 shows a diagram of the varying of the absolute frequency of each sample as a function of the intensity of the signal of the sample coming from Castel di Sangro,
- figure 7 shows a diagram of the varying of the absolute frequency of each sample as a function of the intensity of the signal of the sample of male coming from Sicily,
- figure 8 shows a diagram of the varying of the absolute frequency of each sample as a function of the intensity of the signal of the sample of female coming from Sicily,
- figure 9 shows a comparative diagram, regarding all the samples under investigation, of the varying of the absolute frequency depending on the intensity of the signal, and
- figure 10 shows the model of the standard distribution of the intensity of fluorescence obtained from the samples under analysis.

According to the method of absolute dating of bone finds proposed according to the present invention, the dating of the osseous sample can be made by measuring, by means of a confocal microscope, the intensity of the fluorescence emitted by the sample itself, that is inversely proportional with respect to the antiquity of the find. The higher the intensity of the fluorescence, the more recent the osseous find. As a consequence, on the basis of the method of absolute dating of bone finds proposed according to the present invention, the confocal microscope constitutes a new tool for dating of bone material.

The method of absolute dating of bone finds proposed according to the present invention is supported by the identification of a correlation between intensity of the autofluorescence (measured by confocal microscope) and antiquity of the bone remains.

In the following it is described the protocol used to demonstrate the correlation between intensity of autofluorescence of the histological preparations from ancient bone and dating of the find.

### Example 1. Preparation of the histological sample

A compact, non-decalcified bone dowel was taken and directly cut into thin sections of bone, with a thickness of 150µm, by means of a microtome with circular blade and diamond edge (or, alternatively, with the method of thinning by abrasion).

The histological sections were dehydrated by means of passages in alcohol at increasing gradation (from 70° to 100°, with washes of 15 minutes) and Histolemon^{®} (for at least 15 minutes).

100 µL of a suspension composed of microspheres InSpeck Green (InSpeck Microscope Image Intensity Calibration Kit, component G; Molecular Probes, Eugene, OR USA) (diameter = 6µm; excitation/maximum emission = 540/560nm) dissolved in 1mL of their embedding medium (Tween 20, water, 2mM of sodium azide), 1mL of Histolemon^{®} and a drop of Canada balsam were prepared.

The histological section was put on the glass slide. On each glass slide, close to the sample, 10µL of the above mentioned suspension of microspheres were used, for calibrating fluorescence. The preparation was then completed adding Canada balsam and affixing a glass slide with a thickness of 0,17mm.

### Example 2. Analysis of the intensity of fluorescence by FIDA (Fluorescence-intensity distribution analysis)

The samples, observed with a magnification of 64X, were analysed by confocal microscopy using a Zeiss LSM 510 META system connected to an inverted microscope AXIOVERT 200 and observed by means of a Plan-Neofluar 40X N.A. 1,4 Oil optic. The emission of fluorescence was obtained using the line of excitation at 488nm (AOTF: 15%) of an Argon laser source (15mW). The light emitted by the preparation was acquired by digitalizing the image at 12bit with are solution of 512x512pixel using as first dicroic a filtre HTF 488/543nm, a second dicroic NTF 545nm and finally filtered before the acquisition from PMT with BP 505-530nm mantaining identical the acquisition parameters for all registerd imagine.

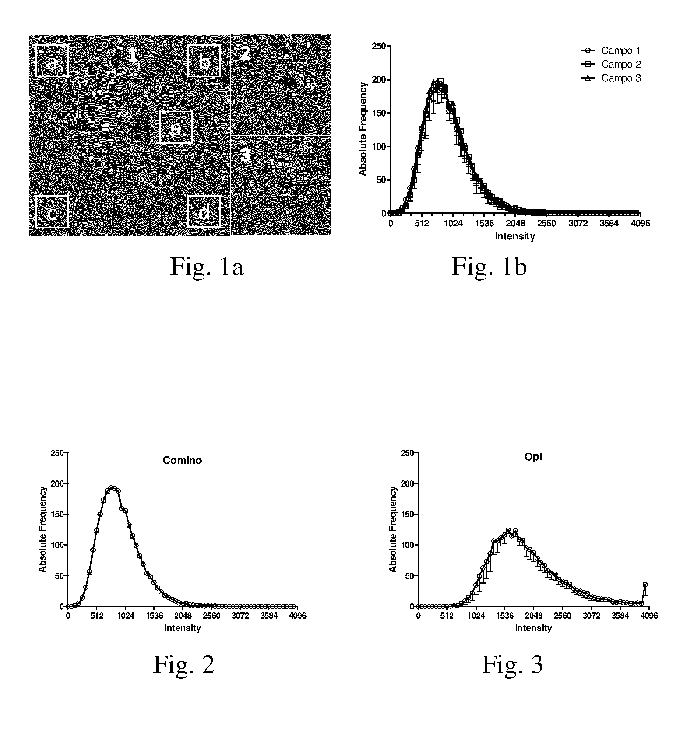

Making reference to figure 1a, for each sample three different fields were taken (indicated as 1, 2, 3 in figure 1) putting in the middle a Haversian canal. The analysis of images was performed off-line by means of the software Zeiss LSM 3.0. For each of the three fields acquired five areas of interest or ROI were identified (shown in figure 1a with references a, b, c, d, e) having fixed dimension (505µm²), four of which located at the periphery of the image, and one in the central area, in proximity of the Haversian canal. Inside these areas the correlation between the intensity of the fluorescent signal (arbitrary units UA) and its frequency was evaluated, with intervals of 64bit. The average value±SEM obtained by the five ROI for each acquired field (Nₜₒₜ= 15 detected values). It was thus calculated and reported on a graphic, shown with reference to figure 1b,.

Following this procedure, histological preparation from bone samples coming from burial contexts with different dating were used, obtaining the results reported in table 1.

In particular, the bone sample coming from Comino, Opi, Ercolano and Monte d'Argento represent classical archaeological contexts. The samples coming from Castel di Sangro represent the case of a mass grave. The sicilian samples were taken from recently exhumed bodies, belonging to a male and a female.

**Table 1**

| Origin | Grave | Age at death | Sex | Dating of the cemetery | Type | Section Thickness (µm) | Numero slides |
|---|---|---|---|---|---|---|---|
| Comino | 25 | 20-25 | ♂ | VIII aC | Femur | 150 | 1 |
| Comino | 45 | 35-40 | ♀ | VIII aC | femur | 150 | 1 |
| Opi | 187 | 35-40 | ♂ | VI aC | Dx femur | 150 | 2 |
| Opi | 198 | 45-50 | ♂ | VI aC | Femur | 150 | 1 |
| Ercolano | 20 | 30-35 | ♂ | I dC | Femur | 150 | 1 |
| Ercolano | 40 | 30-35 | ♂ | I dC | Femur | 150 | 1 |
| M. d'Argento | 32 | | | XIV dC | Sx femur | 150 | 1 |
| M. d'Argento | 70 | 25-30 | ♀ | XIV dC | Femur | 150 | 1 |
| Castel di Sangro | ind.1 mass grave | | | XIX dC | Femur | 150 | 1 |
| Castel di Sangro | ind.2 mass gravee | | | XIX dC | Femur | 150 | 1 |
| Sicily | 1 | 87 | ♂ | XX dC | Femur | 150 | 1 |
| Sicily | 2 | 44 | ♀ | XX dC | Femur | 150 | 1 |

### Example 3. Results

The graphics summarising the elaborations of the acquired fields are reported in figures 2 - 8. Each curve represents the average of values of intensity of fluorescence obtained in the five ROI of the three acquired fields, within the two histological preparations.

The samples analyzed are characterised by a different distribution of the values of intensity of fluorescence.

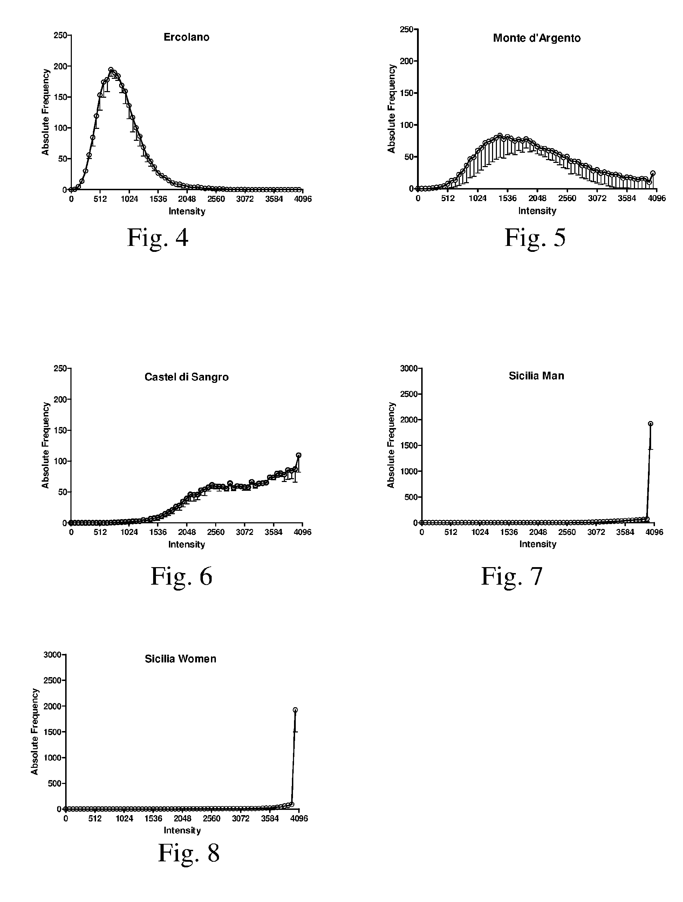

With reference to figures 6, 7 and 8, the samples of Castel di Sangro (XIX sec. a.C.) and of Sicily (XX sec. a.C.) show an intensity of fluorescence upper than |3700| (absolute value of intensity of fluorescence, considering that the absolute value of fluorescence measured on the microspheres used as reference unit, is 4032). The can be distinguished only because of the different absolute frequency with which the peaks of intensity of the fluorescence are presented inside the sample.

Making reference to figures 2, 3, 4 and 5, on the contrary, all the samples coming from classical archaeological contexts show an intensity of fluorescence notably lower than those of Castel di Sangro and the sicilians. In particular, the sample of Comino (VIII sec. a.C.) represented in the chart of figure 2 shows the lower intensity of fluorescence.

Data inferred by samples of Castel di Sangro and from Sicily demonstrate that the intensity of the fluorescence remains relatively changeless during a few tensof years, whereas the frequency with which it is presented dicreases relatively quickly during the same time. The intensity of fluorescence constitutes therefore the discriminating element to be used for the absolute dating of the bone remains.

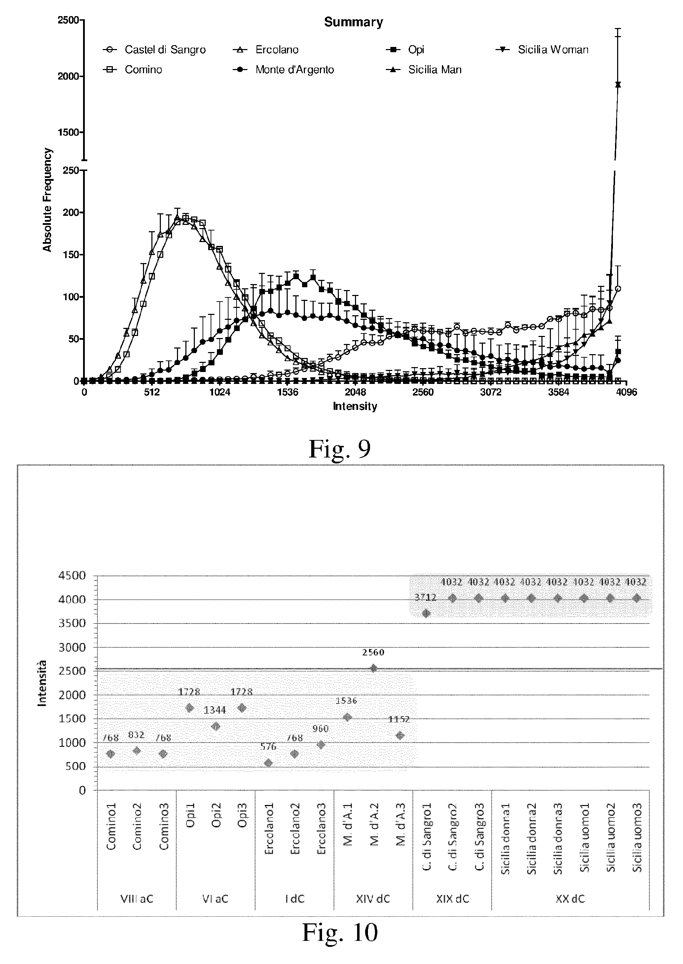

Making reference to figure 9, reporting on a single diagram the curve of the varying of the absolute frequency as a function of the intensity of fluorescence relative to different samples, is os ahown that:
1) more recent samples (Castel di Sangro and Sicily) show peaks of fluorescence notably higher than more ancient samples. The figure is of particular importance in the judiciary. The Criminal Code, in fact, provides for the prescription of the offense for acts committed more than 50 years ago. The proposed method of dating allows to identify recent bone remains, that show peaks of intensity of fluorescence greater than 3700 and that appear with high absolute frequency, discriminating them from more ancient bone finds that show lower peaks of fluorescence and absolute frequencies.
2) The available data show a negative trend of fluorescence moving back in time. The more ancient are the findings, the lower the intensity of fluorescence more frequent in the preparation.
3) The value of intensity of about 2500 is, therefore, the line to date with relative certainty medieval artefacts (intensity of autofluorescence >2500) and finds from Roman and pre-Roman ages (intensity of autofluorescence <2500).
4) The data allow to obtain a standard deployment model of the intensity of fluorescence, which allows to date the finds through a simple interpolation of points.

With reference to Figure 10, in fact, the distribution pattern standard of the intensity of fluorescence obtained from the samples under analysis is shown.

In the figure, the numbers in line with the names of the findings relate to the three fields analyzed in the two slides. The standard model can best be defined by implementing the bone samples.

The instruments used, as well as the chemicals and consumption products used may vary without impairment of the result.

In summary, the analyses carried out so far allow to correlate the values of intensity of fluorescence of bone samples with the antiquity of the same, thereby serving as a new method of absolute dating. In particular, as ummarised in table 2, it is shown that intensity values ≥ 3700 are due to findings of modern times, values comprised between 3700 and 2500 identify findings of medieval ages, whereas values ≤ 2500 can be referred to ancient remains of Roman and pre-Roman. Ages.

**Table 2**

| Intensity of the fluorescence | Chronological reference |
|---|---|
| ≥ 3700 | Modern |
| 3700-2500 | Medieval |
| ≤ 2500 | Ancient (archaeological) |

The present invention was described for illustrative non limitative purposes, according to its preferredembodiments, but it has to be understood that variations and/or modifications can bemade by the skilled in the art without escaping from the relative scope of protection, as defined by the enclosed claims.

## Claims

1. Method of absolute dating of bone finds by measuring the intensity of the emitted autofluorescence.

2. Method of absolute dating of bone finds according to claim 1, **characterised in that** said measuring the intensity of the emitted autofluorescence is performed with a confocal microscope.

3. Method of absolute dating of bone finds according to claim 1 or 2, **characterised in that** it comprises the following steps:
- preparing analysis samples starting from plugs of not decalcified human osseus tissue, by realising thin sections, the size of which is tens or hundreds µm;
- dehydrating the analysis samples;
- arranging the analysis samples on microscope slides, reference sample being arranged on the same slides, made of fluorescence emitting particles having known intensity;
- laser irradiating the analysis samples;
- measuring and comparing the intensity of the emitted autofluorescence from both the analysis samples and the reference samples.

4. Method of absolute dating of bone finds according to claim 3, **characterised in that** said step of preparing analysis samples by realising thin sections provides for realising sections having a thickness comprised between 100 and 200 µm.

5. Method of absolute dating of bone finds according to claim 3 or 4, **characterised in that** said step of dehydrating comprises a series of consecutive washes using alcohol with growing strength and terpenes.

6. Method of absolute dating of bone finds according to claim 5, **characterised in that** said consecutive washes using alcohol with growing strength and terpenes provides for alcohol strength varying from 70° to 100°C.

7. Method of absolute dating of bone finds according to claim 5 or 6, **characterised in that** said terpenes comprise limonene.

8. Method of absolute dating of bone finds according to any of the previous claims, **characterised in that** said step of laser irradiating the analysis samples is performed by using the excitation line at 488nm (AOTF: 15%) of an argon laser source (15mW).

9. Method of absolute dating of bone finds according to any of the previous claims, **characterised in that** said step of measuring the intensity of the sample emitted autofluorescence is performed by using a HTF 488/543nm filter as the first dichroic, a NTF 545nm filter as the second dichroic and at last filtering with BP 505-530nm before the PMT acquisition.
